# EUROPÄISCHE PATENTSCHRIFT

(11) **EP 3 584 173 B1**
(45) Veröffentlichungstag und Bekanntmachung des Hinweises auf die Patenterteilung: **28.04.2021**
(21) Anmeldenummer: 19181078.7
(22) Anmeldetag: 19.06.2019
(51) Int. Cl.: B64F 1/22

(54) **SCHLEPPSTANGE MIT MESSVORRICHTUNG SOWIE VERFAHREN ZU IHREM BETRIEB**
TOWBAR WITH MEASURING DEVICE AND METHOD FOR OPERATING THE SAME
FLÈCHE DE REMORQUAGE POURVUE DE DISPOSITIF DE MESURE AINSI QUE SON PROCÉDÉ DE FONCTIONNEMENT

(30) Priorität: 20.06.2018 DE 102018114874
(43) Veröffentlichungstag der Anmeldung: 25.12.2019
(73) Patentinhaber: JMS AG Jet Maintenance & Service, 77933 Lahr/Schwarzwald (DE)
(72) Erfinder: Korward, Matthias, 77652 Offenburg (DE)
(74) Vertreter: Weickmann & Weickmann PartmbB

(56) Entgegenhaltungen:
- EP-A1- 0 335 611
- EP-A1- 3 216 703
- EP-A2- 1 155 881
- DE-A1- 19 931 865
- GB-A- 2 050 977
- US-A1- 2014 161 579
- US-A1- 2017 305 214

## Beschreibung

### I. Anwendungsgebiet

Die Erfindung betrifft eine Schleppstange, mittels der auf dem Flughafenvorfeld Luftfahrzeuge, etwa Flugzeuge, rangiert werden, indem die Schleppstange einerseits am Bugfahrwerk des Flugzeuges befestigt wird und andererseits an einem Schlepper, und mittels des Schleppers das Flugzeug in die gewünschte Position geschoben oder gezogen wird.

### II. Technischer Hintergrund

Dabei besteht das grundsätzliche Problem, dass der Schlepper über die Schleppstange sowohl Zug- als auch Schubkräfte in das Bugfahrwerk einbringen kann, durch die das Bugfahrwerk überlastet und beschädigt werden kann, und ebenso Torsionskräfte um die Hochachse des Fahrwerkes.

Um dies zu vermeiden, ist in der Schleppstange eine Sollbruchstelle in Form mindestens eines Scherstiftes - meist zwei quer zur Längsmitte der Schleppstange symmetrisch oder in Längsrichtung mit Abstand zueinander angeordnete Scherstifte - eingebaut, dessen oder deren Abscherkraft so niedrig liegt, dass ein vom Flugzeughersteller vorgegebener maximal zulässiger Belastungswert für das Bugfahrwerk des jeweiligen Flugzeugtyps nicht erreicht wird, sondern vorher der Scherstift bricht.

Der Abstand der beiden Durchgangsbohrungen in Querrichtung zueinander und/oder von der Längsmitte der Schleppstange einerseits sowie von der Flugzeug-Kupplung andererseits ist dabei in Relation zur Abscherkraft der vorgesehenen Scherstifte so gewählt, dass weder zu hohe Torsionskräfte um die Hochachse des Fahrwerkes noch zu hohe Druck- oder Zugkräfte von der Schleppstange in das Bugfahrwerk eingebracht werden können.

Dementsprechend muss die Sollbruchstelle und damit der Scherstift für jeden Flugzeugtyp exakt dimensioniert sein.

Um nicht für jeden Flugzeugtyp eine separate Schleppstange zu benötigen, ist es bekannt, in eine Schleppstange hinsichtlich der Abscherkraft unterschiedlich dimensionierte Scherstifte einzusetzen und dadurch die Schleppstange für unterschiedliche Flugzeugtypen einsetzen zu können.

Dabei wird am freien Ende des Basiskörpers der Schleppstange mittels eines bzw. eines Paares baugleicher Scherstifte ein Schleppkopf formschlüssig befestigt, der die Kupplung zum anzukuppelnden Flugzeug trägt. Für unterschiedlich dimensionierte Scherstifte sind im Basiskörper und Schleppkopf unterschiedlich dimensionierte, zueinander fluchtende Durchgangsbohrungen vorhanden und bei einem paarweisen Einsatz von Scherstiften unterschiedliche Paare von Durchgangsbohrungen.

Diese Lösung ist meist vorgeschrieben, weist jedoch mehrere Nachteile auf:
- Zum Einen müssen beim Umrüsten der Schleppstange von einem auf einen anderen Flugzeugtyp die in einem ersten Paar von Durchgangsbohrungen steckenden Scherstifte entnommen werden und stattdessen in ein anderes Paar von Durchgangsöffnungen ein anderes Paar von passenden Scherstiften eingesetzt werden. Dies bedeutet Handarbeit, unter anderem meist das Entfernen und wieder Aufschrauben jeweils einer selbstsichernden Mutter.
- Des Weiteren ist diese Umbaumaßnahme fehleranfällig, indem beispielsweise in eine Durchgangsbohrung ein falscher Scherstift, beispielsweise mit einem zu kleinen Durchmesser, eingesetzt werden könnte.
- Ein weiterer Nachteil ist, dass die als Auszugssicherung aufgeschraubte Mutter zu stark angezogen werden kann, und dadurch der Scherstift in Stiftrichtung unter Vorspannung gesetzt wird, was auch die Abscherkraft in Querrichtung des Scherstiftes verändert.
- Sehr nachteilig ist die Situation beim Brechen eines der Scherstifte aufgrund zu hoher Belastung:
   Bei einem Bruch des Scherstiftes fällt in aller Regel der untere Teil aus der Durchgangsbohrung heraus, und es können dabei auch mehr als zwei Teile entstehen, welche dann in der Regel bis auf eines auf den Untergrund, also das Flughafenvorfeld, fallen.

Da der Bruch in der Regel während des Fahrens geschieht und evtl. nicht immer sofort bemerkt wird, muss anschließend zeitaufwändig das Vorfeld so lange abgesucht werden, bis alle herab gefallenen Teile des gebrochenen Scherstiftes gefunden sind, denn jedes liegen gebliebene Teil kann Beschädigungen an einem Flugzeug hervorrufen, indem es sich in einen Reifen eindrücken und dort ein Platzen des Reifens bei der nächsten Landung bewirken kann oder von einen Triebwerk angesaugt werden kann und zu einer Beschädigung des Triebwerkes führen kann. Damit führt jeder Bruch eines Scherstiftes sehr häufig zu zeitaufwändigen Zusatzmaßnahmen.
- Zu guter Letzt ist auch das Ersatzteil selbst, also der neue Scherstift, relativ teuer, da ein solcher Scherstift nicht nur sehr genau und aufwendig hergestellt werden muss, sondern auch einer intensiven Einzelteil-Prüfung unterzogen werden muss, bevor er zum Einsatz freigegeben werden kann. GB 2 050 977 A beschreibt eine Schleppstange mit einer elektrischen Kraft-Messvorrichtung. Darüber hinaus sei auf die Druckschriften EP 1 155 881 A2 und US 2014/161579 A1 hingewiesen.

### III. Darstellung der Erfindung

### a) Technische Aufgabe

Es ist daher die Aufgabe gemäß der Erfindung, die Schleppstange so auszubilden, dass ein Bruch eines der Scherstifte nach Möglichkeit verhindert wird.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Eine gattungsgemäße Schleppstange besitzt in einem 1. Endbereich eine - vorzugsweise montierbar und demontierbar am Grundkörper befestigte - Schlepper-Kupplung zum Ankuppeln des benutzten Schleppers und in einem 2. Endbereich der Schleppstange eine spezifisch für den zu schleppenden oder zu schiebenden Flugzeugtyp ausgebildete Flugzeug-Kupplung.

Die Flugzeug-Kupplung ist dabei in der Regel an einem in Längsrichtung sich an den Grundkörper anschließenden Schleppkopf ausgebildet. N

Der Grundkörper selbst umfasst in aller Regel eine stangenförmige Basisstange, meist ein hohles Basisrohr.

Zum Befestigen des Schleppkopfes weist der Grundkörper an seinem Schleppkopf-Ende eine Schleppkopfaufnahme auf, die an der Basisstange befestigt, meist verschraubt, ist, und mit der der Schleppkopf mittels des wenigstens einen Scherstiftes, vorzugsweise ausschließlich mittels des wenigstens einen Scherstiftes, formschlüssig gekoppelt wird.

In der Regel sind zwei Scherstifte vorhanden, die quer, vorzugsweise lotrecht, zur Längsrichtung der Schleppstange zueinander beanstandet oder in Längsrichtung zueinander beabstandet sind und vorzugsweise parallel zur aufrecht stehenden Längs-Mittelebene der Scherstange angeordnet sind und ebenfalls aufrecht, vorzugsweise lotrecht, verlaufen.

Durch Messung und Vergleich der an den Scherstiften vorhandenen Scherkräfte kann auch das in der Scherstange vorliegende Moment um eine aufrechte, vorzugsweise lotrechte, Achse ermittelt werden, was ebenfalls von Bedeutung ist, da die Flugzeug-Kupplung aufgrund der Gestaltung des Kupplungsteiles am Flugzeug in aller Regel in der Lage ist, auch Drehmomente um eine aufrechte Achse auf die Flugzeugkupplung zu übertragen, und auch ein solches übertragenes Drehmoment begrenzt werden muss.

Hinsichtlich einer solchen Schleppstange wird diese Aufgabe dadurch gelöst, dass die Schleppstange eine Warnvorrichtung mit einer Messvorrichtung umfasst, deren Kraft-Sensor insbesondere nach einem elektrischen Wirkprinzip funktioniert, und die die in der Schleppstange, insbesondere in dem wenigstens einen Scherstift, auftretende Kraft und/oder Drehmoment um eine aufrechte Achse misst, und bei Überschreiten eines Grenzwertes eine Warnreaktion durchführt, insbesondere ein Warnsignal abgibt.

Daraufhin kann die in der Schleppstange auftretende Belastung vom Bediener durch entsprechende Maßnahmen, insbesondere eine Reduzierung der vom Schlepper auf die Schleppstange aufgebrachten Zugkraft oder Schubkraft, verringert oder zumindest nicht weiter gesteigert werden, und da der Grenzwert, bei dem die Warnreaktion abgegeben wird, niedriger liegt als diejenige Kraft, die auftreten muss, damit der Scherstift bricht, dadurch ein Brechen des Scherstiftes vermieden werden.

Entweder wird die in der Schleppstange in deren Längsrichtung herrschende Längskraft gemessen und daraus auf die quer zum Scherstift wirkende Scherkraft geschlossen, oder es wird direkt am Scherstifte die dort herrschende Scherkraft gemessen, wobei bei den beschriebenen 2 nebeneinanderliegenden Scherstifte auch das Drehmoment um eine aufrechte Achse ermittelt werden kann.

Auf diese Art und Weise wird ein Brechen eines Scherstiftes nach Möglichkeit vollständig vermieden, zumindest die Häufigkeit des Auftretens solcher Brüche stark reduziert.

Dies erspart die mit dem Brechen eines Scherstiftes eingangs beschriebenen Nachteile hinsichtlich Zeitaufwand und Kosten.

Da die Warnvorrichtung, insbesondere die Messvorrichtung, vorzugsweise elektrisch funktioniert, ist in aller Regel eine Stromversorgung, insbesondere eine Stromquelle, in der Schleppstange notwendig, die die Warnvorrichtung mit elektrischem Strom versorgt. Da die benötigten Strommengen relativ gering sind, genügt hierfür häufig ein nachladbarer Stromspeicher, also ein elektrischer Akku.

Das Warnsignal, welches die Vorrichtung abgibt, kann ein optisches oder ein akustisches Signal sein.

Die Warnreaktion, die die Warnvorrichtung durchführen kann, kann jedoch auch, gegebenenfalls zusätzlich, darin bestehen, automatisch die momentane Antriebs-Leistung des Schleppers nicht zu erhöhen oder gar zu senken, und dadurch automatisch die in die Schleppstange eingebrachte Kraft und somit auch die von der Messvorrichtung , insbesondere dem KraftSensor der Messvorrichtung , gemessene Kraft nicht weiter zu erhöhen oder gar zu verringern.

Der Kraft-Sensor, insbesondere die gesamte Messvorrichtung, ist vorzugsweise an oder in der Schleppstange, insbesondere in deren Basisrohr, angeordnet.

Die Warnvorrichtung kann an oder in der Schleppstange oder auch vorzugsweise drahtlos damit verbunden im Schlepper angeordnet sein.

Der Signalgeber der Warnvorrichtung zur Abgabe des optischen oder akustischen Warnsignals kann an der Schleppstange selbst und/oder am Schlepper und/oder im Schlepper, insbesondere in der Fahrerkabine des Schleppers und/oder auf dessen Außenseite, angeordnet sein.

Die Warnvorrichtung kann insbesondere ein Display in der Fahrerkabine des Schleppers umfassen, auf dem die Größe der gemessenen Kraft, und oder des gemessenen Drehmomentes, insbesondere in Relation zur Bruchkraft des momentan verwendeten Scherstiftes oder in absoluten Werten, angezeigt wird, vorzugsweise optisch anhand von beispielsweise drei Relationsstufen (unkritisch, nahe am kritischen Bereich, kritisch) was insbesondere optisch bekanntermaßen durch die drei Farben Grün, Gelb oder Rot dargestellt werden kann.

Es können unterschiedliche Kraft-Sensoren im Rahmen der Messvorrichtung eingesetzt werden und auch an unterschiedlichen Stellen:
Eine sehr einfache Lösung stellen Dehnmessstreifen dar, die natürlich so angeordnet werden müssen, dass sie die in der Schleppstange herrschende Kraft in der gewünschten Richtung, meist der Längsrichtung der Schleppstange, messen und mit dem Rest der Messvorrichtung, insbesondere deren Warnvorrichtung, elektrisch verbunden sind. Die Warnvorrichtung muss dabei in der Lage sein, aufgrund der von der Messvorrichtung gemessenen Kraft auf die in dem Scherbolzen vorliegende Querkraft zu schließen, insbesondere diese zu berechnen.

Eine andere Lösung besteht darin, Lastmess-Bolzen zu verwenden, wie sie grundsätzlich bekannt und im Handel erhältlich sind, und über einen solchen Lastmess-Bolzen den Grundkörper und den Schleppkopf formschlüssig miteinander zu verbinden.

Ein solcher Lastmess-Bolzen kann zur formschlüssigen Verbindung zwischen zwei Bauteilen durch entsprechende, zueinander fluchtende Durchgangsöffnungen hindurch gesteckt werden.

Die Lastmess-Bolzen funktionieren nach unterschiedlichen Wirkprinzipien, teilweise sind für die Kraftmessung in den Lastmess-Bolzen ebenfalls Dehnmessstreifen verwendet.

Solche Lastmess-Bolzen können die am Lastmess-Bolzen angreifenden Scherkräfte, also quer zu dessen Erstreckungsrichtung, messen und/oder die in seiner Erstreckungsrichtung herrschenden Zugkräfte, wozu der LastmessBolzen natürlich so verbaut sein muss, dass er an beiden Enden entsprechende Anschläge aufweist, um ihn in Längsrichtung zu belasten, beispielsweise indem der Lastmess-Bolzen als Schraube mit aufzuschraubender Mutter ausgebildet ist.

Wenn ein solcher Lastmess-Bolzen direkt als Scherstift verwendet wird, misst die Messvorrichtung unmittelbar die im Scherstifte vorliegende Scherkraft, so dass eine indirekte Ermittlung der im Scherstift vorliegenden Querkraft nicht notwendig ist.

Wenn der Lastmess-Bolzen zusätzlich zu dem wenigstens einen Scherstift eingesetzt wird ,muss durch die Position und Art der Einbindung des Lastmess-Bolzens in die Schleppstange sichergestellt werden, dass zwischen der momentan auf den Lastmess-Bolzen wirkenden Kraft und der momentan auf den Scherstift wirkenden Kraft immer eine bekannte Relation besteht, um einen zulässigen Grenzwert für den an der Messstelle eingesetzten Lastmess-Bolzen, zum Beispiel an dem als Lastmess-Bolzen ausgebildeten Fangbolzen, korrekt festlegen zu können.

Da ein als Lastmess-Bolzen ausgebildeter Scherstift teurer ist als ein normaler Scherstift, ist bei einem Bruch eines solchen Scherstiftes der Schaden durch den Preis des Scherstiftes höher als bei einem normalen Scherstift, jedoch ist die Ausbildung der Schleppstange besonders einfach, da keine weiteren konstruktiven Maßnahmen außer der Anordnung der Warnvorrichtung mit der Messvorrichtung an der Schleppstange vorgenommen werden müssen.

Falls ein Lastmess-Bolzen dagegen zusätzlich zu dem Scherstift vorhanden ist, wird vorzugsweise eine zweite Verbindungsstelle benötigt, bei der durch den Lastmess-Bolzen zwei Teile der Schleppstange formschlüssig miteinander verbunden, insbesondere an dieser zweite Verbindungsstelle ausschließlich durch den Lastmess-Bolzen miteinander verbunden werden, also abseits der durch den Scherstift oder die Scherstifte gebildeten ersten Verbindungsstelle zwischen Schleppkopf-Aufnahme und Schleppkopf. Die zweite Verbindungsstelle ist dann vorzugsweise am oder im Grundkörper der Schleppstange ausgebildet.

Vorzugsweise muss hierfür der Lastmess-Bolzen eine höhere Belastbarkeit, insbesondere Bruchkraft, aufweisen als der eingesetzte Scherstift.

Da der Grundkörper ohnehin meist aus einer Basisstange, etwa einem Basisrohr, und der daran verschraubten Schleppkopf-Aufnahme besteht, kann dies als zweite Verbindungsstelle gewählt werden und als LastmessBolzen vorzugsweise einer oder mehrere dieser Verbindung-Schrauben zwischen Basisstange und Schleppkopf-Aufnahme verwendet - wobei dann die Längsrichtung des Lastmess-Bolzens mit der Längsrichtung der Schleppstange übereinstimmt und deshalb ein Lastmess-Bolzen verwendet werden muss, der die in seiner Erstreckungsrichtung vorliegende Kraft misst. Eine andere oder zusätzliche Lösung könnte darin bestehen, zwischen Basisstange und Schleppkopf-Aufnahme eine weitere Verbindungstelle vorzusehen, deren zwei miteinander zu verbindende Teile durch mindestens einen in Querrichtung zur Längsrichtung der Schleppstange eingesetzten Lastmess-Bolzen formschlüssig verbunden werden. Dann muss ein Lastmess-Bolzen verwendet werden, der die quer zu seiner Erstreckungsrichtung vorliegenden Kräfte misst

Falls dagegen der Lastmess-Bolzen an der gleichen Verbindungsstelle eingesetzt wird wie der wenigstens eine Scherstift, aber zusätzlich zum Scherstift diese beiden Teile, also Schleppkopf-Aufnahme und Schleppkopf, miteinander verbindet, muss dafür Sorge getragen werden, dass die am Lastmess-Bolzen einwirkende Kraft gleich hoch oder höher ist als die am Scherstift auftretende Kraft und/oder am Lastmess -Bolzen gleichzeitig oder früher anliegt als am Scherstift.

Dies kann beispielsweise dadurch erreicht werden, dass die Öffnung zur Aufnahme des Lastmess-Bolzens enger toleriert ist als die Aufnahme des Scherstiftes im Vergleich zu dem Durchmesser des jeweils aufzunehmenden Stiftes bzw. Bolzens, und dadurch bei Zug- oder Schub-Belastung in Längsrichtung der Lastmess-Bolzen vordem Scherstift mit Kraft beaufschlagt wird.

Vorzugsweise werden bei quer zur Längsrichtung der Schleppstange verbauten Lastmess-Bolzen zwei Lastmess-Bolzen an gleicher Längsposition und quer zur Längsrichtung beanstandet, insbesondere symmetrisch zur Längs-Mittelebene, eingesetzt, um außer den an den Lastmess-Bolzen gemessenen Scherkräften durch eine entsprechende Auswerteschaltung der Messvorrichtung auch das um eine aufrechte Achse vorliegende Drehmoment in der Schleppstange bestimmen zu können und auch hierfür der Warnvorrichtung einen Grenzwert vorgeben zu können.

Eine weitere Möglichkeit besteht darin, den in der Schlepper-Kupplung verwendeten Kupplungs-Bolzen als Lastmess-Bolzen auszubilden, jedoch können darüber lediglich in der Schlepper-Kupplung und damit auch in der Schleppstange vorliegende Kräfte in Längsrichtung der Schleppstange gemessen werden, aber keine Drehmomente um eine quer verlaufende, insbesondere aufrechte Achse hierzu.

Eine weitere Möglichkeit besteht darin, zur Kraftmessung und/oder Drehmoment-Messung im Rahmen der Messvorrichtung einen sogenannten Ringkraft-Aufnehmer zu verwenden, die am Markt erhältlich sind.

Dabei handelt es sich um ein - meist zylindrisches - Bauteil, an dessen einander gegenüberliegenden Stirnflächen, den Befestigungflanschen des Ringkraft-Aufnehmers, diejenigen Bauteile befestigt, meist verschraubt, werden können, sodass der Ringkraft-Aufnehmer diejenigen Kräfte - in axialer Richtung und/oder wenigstens einer der Querrichtungen hierzu - misst, die an dieser Verbindungsstelle zwischen den beiden Bauteilen herrschen.

Die beiden Befestigungflansche des Ringkraft-Aufnehmers sind meist als Ringe oder Platten ausgebildet, die durch Stege oder andere Verbindungselemente miteinander verbunden sind, an oder in denen die entsprechenden Kräfte gemessen werden, sodass daraus auch Drehmomente um wenigstens eine der radialen Richtungen des Ringkraft-Aufnehmers, gegebenenfalls stattdessen oder zusätzlich auch um die axiale Richtung des Ringkraft-Aufnehmers ermittelt werden können.

Ein solcher Ringkraft-Aufnehmer kann je nach Bauart auch unmittelbar ein Drehmoment um seine axiale Richtung und/oder wenigstens eine der Querrichtungen hierzu messen und ausgeben, die zwischen seinen beiden Befestigungflanschen vorliegen.

Ein solcher Ringkraft-Aufnehmer wird vorzugsweise mit seiner axialen Richtung fluchtend zur Längsrichtung der Schleppstange zwischen zwei in Längsrichtung aneinander grenzenden Teilen der Schleppstange eingebaut, vorzugsweise zwischen der Basisstange oder dem Basisrohr und der daran angrenzende Schleppkopf-Aufnahme, an denen ohnehin meist bereits Ringflansche mit Bohrungen zum Verschrauben vorhanden sind.

Der Stromspeicher wird vorzugsweise geschützt im Inneren der als hohles Basisrohr ausgebildeten Basisstange untergebracht, vorzugsweise mit elektrischen Anschlüssen auf der Außenseite der Basisstange zum Nachladen des Stromspeichers, und auch der elektronische Teil der Warnvorrichtung, insbesondere der Messvorrichtung , wird vorzugsweise im Inneren des Grundkörpers, vorzugsweise des Basisrohres geschützt untergebracht.

Der Alarmgeber, beispielsweise ein Lautsprecher und/oder eine Lichtquelle, sind natürlich vorzugsweise auf der Außenseite der Schleppstange und/oder an oder in dem Schlepper angeordnet.

Aufgrund der in der Schleppstange vorhandenen Stromquelle, vorzugsweise dem elektrischen Akku, können an der Schleppstange auch andere elektrisch betriebene Elemente eingesetzt werden:
Beispielsweise ist es sinnvoll, einen Positionssensor an oder in der Aufnahme für den Scherstift anzuordnen, der den darin eingesetzten Scherstift hinsichtlich dessen Axialposition detektiert und der signaltechnisch mit der Warnvorrichtung verbunden ist.

Ebenso kann es sinnvoll sein, einen Identifikations-Sensor an oder in der Aufnahme für den Scherstift anzuordnen, der den darin eingesetzten Scherstifte hinsichtlich seiner Art, insbesondere hinsichtlich seines an der Sollbruchstelle vorliegenden Durchmessers, detektiert und der signaltechnisch mit der Warnvorrichtung verbunden ist.

Diese beiden Sensoren können auch funktionsvereinigt sein.

Die Warnvorrichtung kann bei negativem Signal eine Warnreaktion durchführen, beispielsweise wenn der wirksame Durchmesser des Scherstiftes nicht mit dem wirksamen Soll-Durchmesser für diesen Flugzeugtyp übereinstimmt - was die Warnvorrichtung automatisch überprüfen kann, sofern der anzukoppelnde Flugzeugtyp zuvor eingegeben wird - und/oder wenn der Scherstift nicht ausreichend weit in seiner axialen Richtung eingeschoben ist.

Ebenso können Sensoren an der Flugzeug-Kupplung und/oder an der Schlepper-Kupplung der Schleppstange vorhanden sein, die zumindest den vollständig geschlossenen und/oder vollständig geöffneten Zustand der Kupplung detektieren und an die Warnvorrichtung melden, die diesen Zustand beispielsweise auf einem Display wiedergibt, was natürlich vorzugsweise nur dann möglich ist, wenn die an der Schleppstange angeordnete Kupplung zwischen diesen beiden Zuständen umgeschaltet werden kann.

Des Weiteren besitzt eine Schleppstange in aller Regel ein Fahrwerk, meist mit zwei Rädern, mit denen die Schleppstange allein, in der Regel manuell, verfahren werden kann für das Ankoppeln am Flugzeug und/oder am Schlepper.

Dabei besitzt das Fahrwerk in aller Regel auch eine Ausfahrvorrichtung, mit der die Räder zwischen einem an den Grundkörper angehobenen, deaktivierten Zustand und einem vom Grundkörper aus nach unten beabstandeten, aktivierten Zustand, in dem die Räder vorzugsweise auf dem Untergrund aufsitzen, hin und her bewegt werden können.

Denn nach der Benutzung der Schleppstange, also im Zustand noch verbunden sowohl mit dem Schlepper als auch mit dem Flugzeug, muss das Fahrwerk nach unten ausgefahren werden, vorzugweise bis die Räder Kontakt mit dem Untergrund haben, damit nach dem Lösen einer der Kupplungen die Schleppstange mit einem ihrer Enden nicht auf den Untergrund herabfällt, da hierdurch die entsprechende Kupplung beschädigt werden könnte.

Die Verstellung zwischen aktivierter und deaktivierter Stellung des Schleppstangen-Fahrwerks erfolgt bei Schleppstangen, die in der Regel über keine elektrische Ausstattung und keine Stromquelle verfügen, manuell, beispielswese indem das Ein- und Ausfahren über einen Hydraulikzylinder erfolgt, der von einer manuell betätigten Hydraulikpumpe aus mit Druckmedium versorgt und aus- oder eingefahren wird, was Zeit- und Kraftaufwendig für den Bediener ist.

Erfindungsgemäß kann nun die Ausfahr-Vorrichtung einen elektrischen Antrieb aufweisen, der mittels der Stromquelle, insbesondere des Akku, mit Energie versorgt wird.

Das Betätigungselement zum Aus- oder Einfahren der Ausfahrvorrichtung kann an der Schleppstange vorhanden sein und dann vorzugsweise drahtgebunden mit dem Antrieb der Ausfahrvorrichtung verbunden sein, oder ein Mobilteil, beispielsweise ein Funk-Sender, sein, welches vom Bediener am Körper getragen wird und/oder in der Fahrerkabine des Schleppers aufbewahrt werden kann.

Um ein manuelles Nachladen des Akku durch den Bediener von außerhalb der Schleppstange zu vermeiden und damit auch einen entleerten Akku dauerhaft zu vermeiden, kann eines der Räder des Schleppstangen-Fahrwerks mit einem elektrischen Generator-Motor drehfest gekoppelt sein, der im Generatorbetrieb, also beim Verfahren der Schleppstange mit ihren Rädern auf dem Untergrund und damit drehenden Räder, Strom erzeugt und damit den Stromspeicher nachlädt. Ein solcher Generator sollte vorzugsweise seitens des Bedieners ein- und auskuppelbar sein, damit der Bediener beim manuellen Verfahren der Schleppstange nicht zusätzlich den Generator antreiben muss.

Der weitere Vorteil besteht darin, dass ein solcher Generator-Motor bei Stromversorgung durch den Akku auch als elektrischer Motor eingesetzt werden kann und wenigstens eines der Räder und damit das Schleppstangen-Fahrwerk antreiben kann, sodass das Verfahren der Schleppstange alleine, also ohne Schlepper, auf dem Vorfeld nicht mehr durch die Kraft des Bedieners erfolgen muss, sondern dieser lediglich ein Betätigungselement zum Ingangsetzen des elektrischen Fahr-Antriebes betätigen muss.

Das Betätigungselement zum Auslösen dieses Fahr-Antriebes und Vorgeben der Fahrtrichtung, also Drehrichtung der Räder, ist vorzugsweise an der Schleppstange ausgebildet, und vorzugsweise nahe an der Schlepper-Kupplung vorhanden, und/oder nahe an der Flugzeug-Kupplung, denn der Bediener wird die Schleppstange alleine in der Regel an einem dieser Enden halten, vorzugsweise an einem der dort hierfür vorgesehenen Handgriffe.

Hinsichtlich des Verfahrens zum Betreiben einer solchen Schleppstange wird die Aufgabe dadurch gelöst, dass beim Schleppen oder Schieben eines Luftfahrzeuges vor Erreichen der Bruchkraft des Scherstiftes aufgrund der Abgabe eines Warnsignals oder einer anderen Warnreaktion die vom Schlepper in die Schleppstange eingebrachte Kraft, insbesondere die Leistung des Schleppers, reduziert wird, sei es veranlasst durch die Warnvorrichtung selbst oder durch den Bediener des Schleppers aufgrund des Warnsignals. Dadurch kann ein Bruch des Scherstiftes vermieden werden.

Um den Betrieb der Schleppstange weiter zu beschleunigen und zu automatisieren, kann die Schlepper-Kupplung zwischen Schlepper und Schleppstange einen elektrisch in die Schlepper-Kupplung ein- und ausfahrbaren Kupplungsbolzen umfassen.

Meist ist dabei das Kupplungsmaul mit dem Kupplungsbolzen am Schlepper befestigt, während die Schlepper-Kupplung der Schleppstange lediglich aus einer Kupplungs-Öse besteht, die in das Kupplungsmaul eingeschoben wird. Dann muss der elektrisch ein- und ausfahrbare Kupplungsbolzen am Schlepper vorhanden sein.
Jedoch ist auch die umgekehrte Anordnung möglich, und dann ist der elektrisch ein- und ausfahrbaren Kupplungsbolzen Bestandteil der Schleppstange.

Unabhängig davon kann mittels eines elektrischen Antriebes für den Kupplungsbolzen dieser - ausgelöst von einem Betätigungselement - automatisch ein oder ausgefahren werden, also die Schlepper-Kupplung geöffnet oder geschlossen werden.

Dies kann entweder von einem in der Fahrerkabine fest installierten Betätigungselement aus geschehen, oder wiederum mittels einer drahtlos mit dem Antrieb verbundenen Betätigungselement, etwa einem Funksender, den der Bediener bei sich tragen kann.

Zusammen mit einem Sensor, der zumindest den Öffnungs- oder Schließzustand dieser Schlepper-Kupplung, also den eingefahren oder ausgefahrenen Zustand des Kupplungsbolzens, detektiert und der vorzugsweise Bestandteil der Schleppstange ist und mit deren Warnvorrichtung gekoppelt ist, kann der Bediener - auch ohne die Fahrerkabine des Schleppers zu verlassen - die Schleppstange am Schlepper ankuppeln.

Vorzugsweise umfasst die Schleppstange zu diesem Zweck nicht nur ein Rad-Paar mit auf einer gemeinsamen Achsrichtung, sondern zwei voneinander in Längsrichtung beabstandete Rad-Paare, die gemeinsam oder separat mittels einer Ausfahrvorrichtung zwischen einer aktivierten und deaktivierten Stellung auf- und abwärts gefahren werden können, vorzugsweise auch in allen Zwischenstellungen angehalten werden können.

Dadurch lässt sich die Schleppstange in der Horizontalen oder auch in einer gewünschten Neigung gegenüber der Horizontalen einstellen und halten, ohne dass die Schleppstange an einem der beiden Enden bereits angekoppelt ist.

Dies ist vorteilhaft, um eine freistehende Schleppstange auf die richtige Höhe Einstellen und dann durch Heranfahren entweder mit dem Schlepper oder mit dem Flugzeug kuppeln zu können, wobei Ersteres aufgrund der vorbeschriebenen Ausstattungsmerkmale möglich wäre, ohne dass der Fahrer die Fahrerkabine des Schleppers verlässt.

### c) Ausführungsbeispiele

Ausführungsformen gemäß der Erfindung sind im Folgenden beispielhaft näher beschrieben. Es zeigen:
- **Figur 1:**: eine bekannte Schleppstange im Einsatz in der Seitenansicht,
- **Figur 2a:**: eine erfindungsgemäße Schleppstange in einer Seitenansicht angehängt an einen Schlepper,

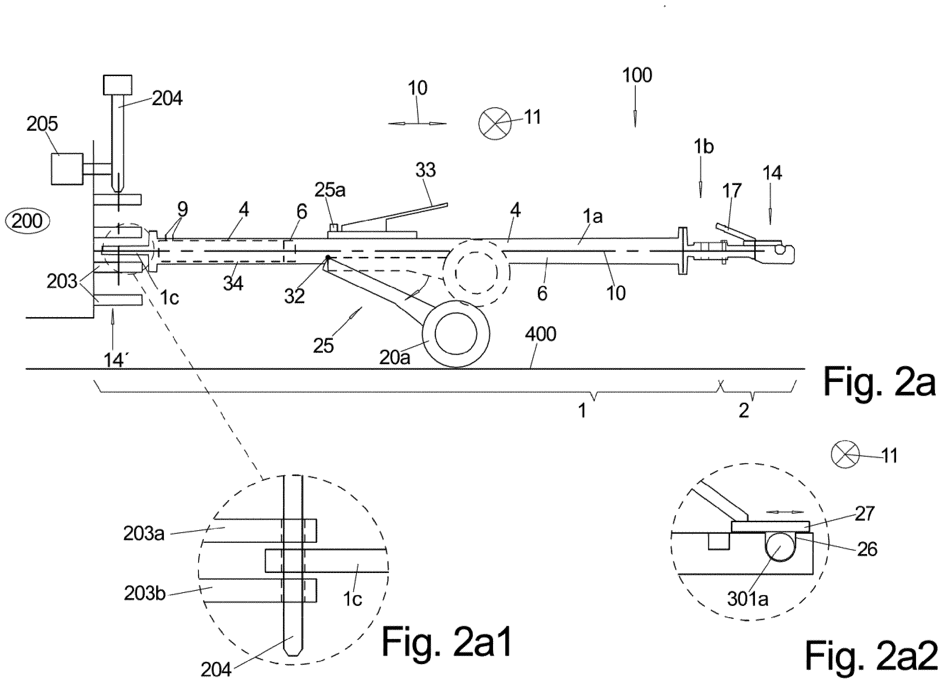

- **Figur 2a1, 2a2:**: vergrößerte Darstellungen aus Figur 2a,

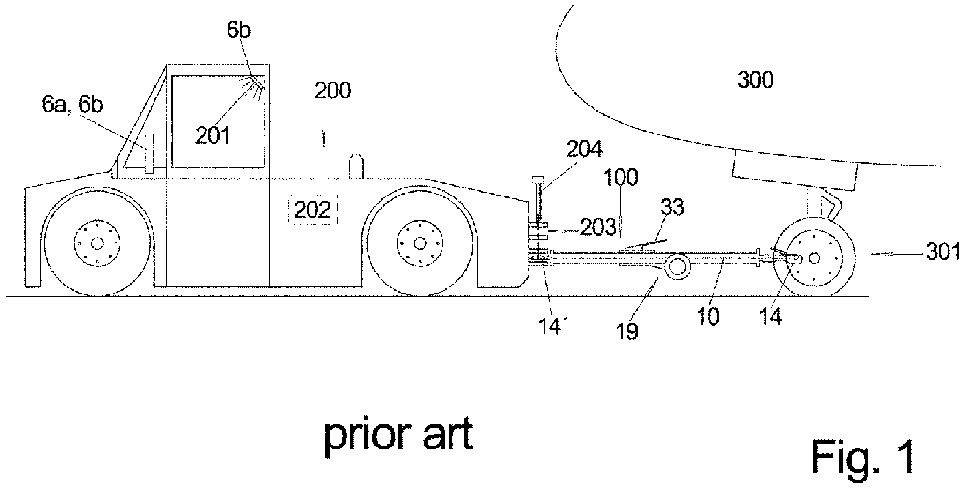

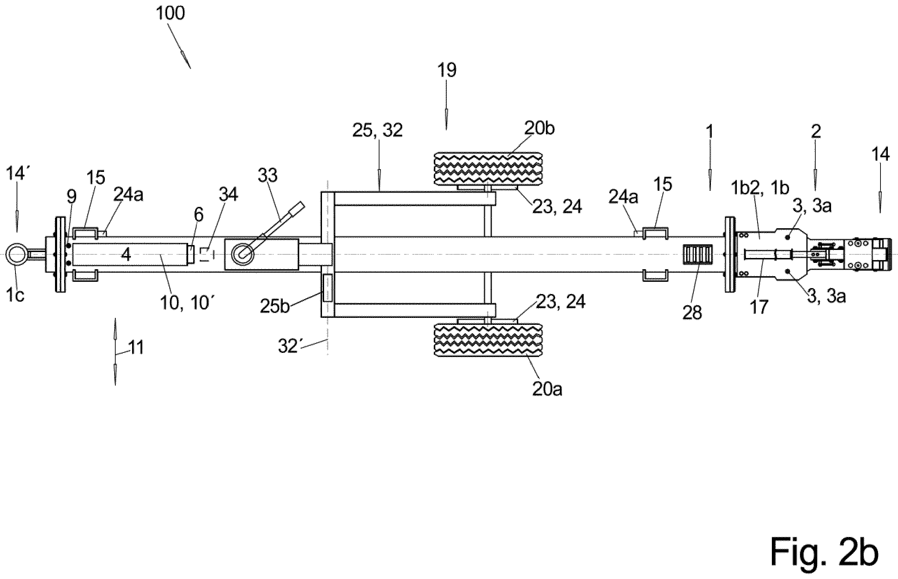

- **Figur 2b:**: eine Aufsicht auf die Schleppstange gemäß Figur 1a,

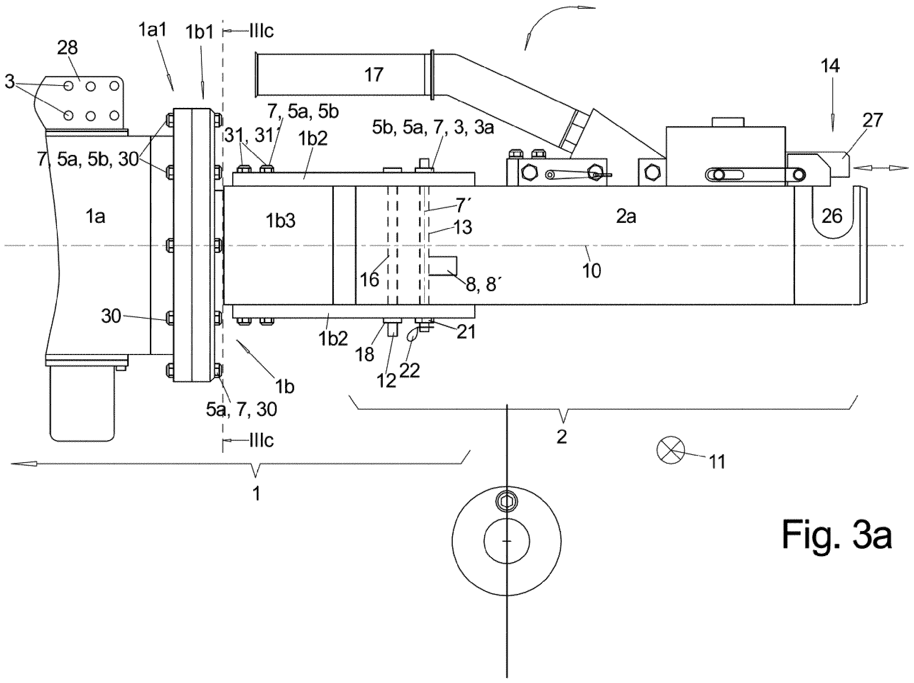

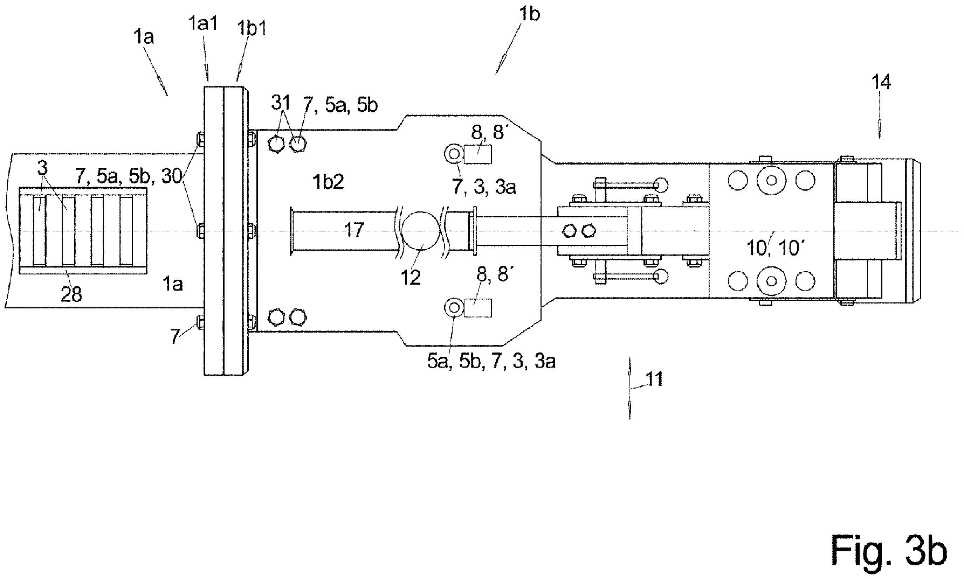

- **Figur 3a, b:**: vergrößerte Darstellung des Schleppkopfes der Schleppstange, in Seitenansicht und in der Aufsicht,

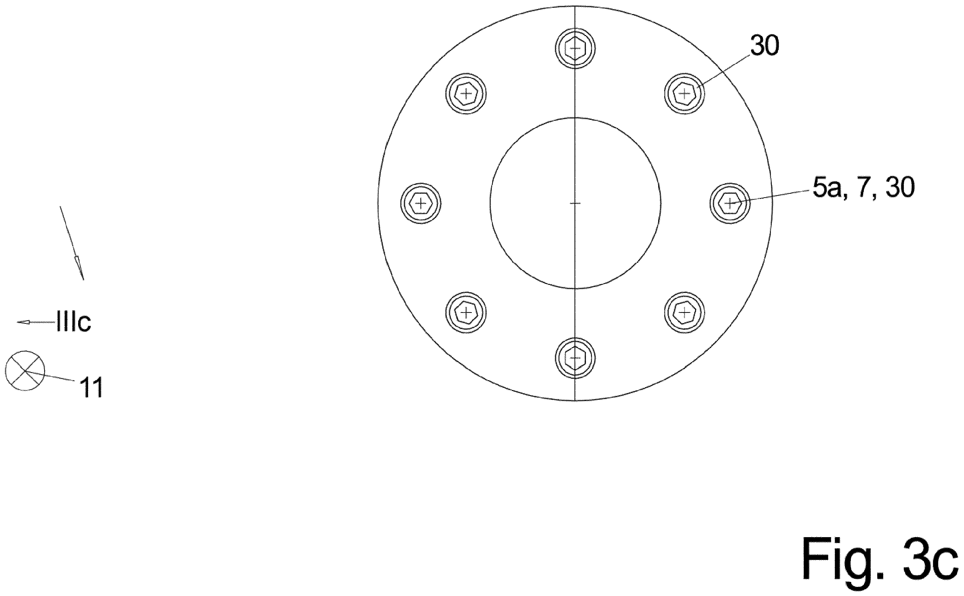

- Figur 3c:: eine Schnittdarstellung des Befestigungsflansches der Schleppkopf-Aufnahme entlang der Linie IIIc - IIIc in Figur 3A,

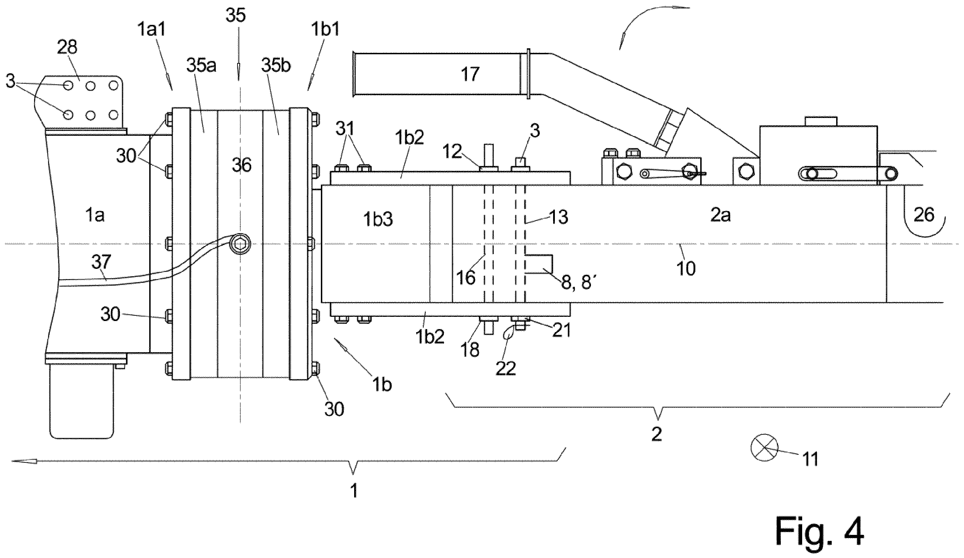

- Figur 4:: in der Seitenansicht eine Schleppstange mit Ringkraft-Aufnehmer.

Zunächst wird der grundsätzliche Aufbau einer bekannten Schleppstange anhand insbesondere der **Figur 1** beschrieben:
Die Schleppstange 100 ist in **Figur 1** im Einsatz dargestellt, indem sie mit dem einen Ende mit ihrer Flugzeug-Kupplung 14 am Bugfahrwerk 301 eines Flugzeuges 300 angekuppelt ist und mit dem anderen Ende mit ihrer Schlepper-Kupplung 14' an das Kupplungsmaul 203 eines Schleppers 200 angekuppelt ist. Die Schleppstange 100 hat dabei keinen Kontakt zum Untergrund.

Der Schlepper 200 besitzt eine Fahrerkabine 201, in der ein Fahrer sitzt und mittels üblicher Bedienelemente und eine Fahrzeug-Steuerung 202 des Schleppers 200 dessen Leistung und Geschwindigkeit sowie Richtung steuert.

Die Kupplung am Heck des Schleppers 200 ist eine übliche Maulkupplung mit einem Kupplungsmaul 203 umfassend eine obere und eine untere, etwa horizontal verlaufende Platte, in der sich jeweils fluchtend zueinander Durchgangsöffnungen befinden. Zwischen die Maul-Platten wird die Anhängeöse 1c am vorderen Ende des Grundkörpers 1 der Schleppstange 100 eingeführt, bis deren vertikal verlaufende Durchgangsöffnung mit den Durchgangsöffnungen in den Maul-Platten fluchtet, und dann durch alle drei Öffnungen hindurch der Kupplungsbolzen 204 geschoben wird und damit die Schleppstange 100 am Schlepper 200 angekuppelt ist.

Die Schlepper-Kupplung 14' so am anderen Ende der Schleppstange 100 ist ebenfalls formschlüssig ausgebildet:
In der Oberseite des flugzeugshaltigen Endes der Schleppstange 100 befindet sich eine in Querrichtung über die gesamte Breite der Schleppstange 100 an dieser Stelle verlaufende Rinne 26, in die ein Querbolzen 301a, der Bestandteil des Bugfahrwerkes 301 des Flugzeuges 300 ist, eingelegt werden kann.

Auf der Oberseite der Schleppstange 100 ist hier ein Schieber 27 geführt, der zwischen einer die Oberseite der Rinne 26 verschließenden Sicherungsstellung und einer diese freigebende Offenstellung entlang der Schleppstange 100 in Längsrichtung 10 verschiebbar ist mittels eines Schwenkgriffes 17.

In der Schließstellung ist die Schleppstange 100 am Bugfahrwerk 301 angekuppelt, da der Querbolzen 301a nicht mehr nach oben aus der Rinne 26 herausbewegt werden kann, wie am besten in **Figur 2a2** ersichtlich.

Ferner umfasst die Schleppstange 100 ein Schleppstangen-Fahrwerk 19 mit zwei in Querrichtung beabstandet nebeneinander angeordneten Rädern 20a, b, die am freien Ende einer Schwinge angeordnet sind, die durch verschwenken als Ausfahr-Vorrichtung 25 für die Räder 20a, b dient und mit deren Hilfe die Räder 20a, b an die Schlepperstange 100 angehoben oder von dieser aus nach unten ausgefahren werden können.

Wie in Verbindung der **Figur 2a** sowie der **Figuren 3a**, **b** ersichtlich, besteht die Schleppstange 100 aus einem Grundkörper 1, an dessen einem, dem Flugzeug-seitigen, Ende ein Schleppkopf 2 befestigt ist der die beiden Teile verbindende Scherstifte 3, deren Bruchbelastbarkeit so ausgelegt ist, dass diese maximal derjenigen Kraft entspricht, die auf das Bugfahrwerk 301 des Flugzeuges 300 übertragen werden darf.

Zu diesem Zweck besteht der Grundkörper 1 aus einer Basisstange 1a, in aller Regel einem Basisrohr 1a, welches am vorderen Schlepper-seitigen Ende die Anhängeöse 1c trägt, und an deren hinteren, Flugzeug-seitigen Ende eine Schleppkopf-Aufnahme 1b zum Aufnehmen des Schleppkopfes 2 vorhanden ist.

Dabei weist die Basisstange 1a an ihrem hinteren Ende eine Flanschplatte 1a1 und die Schleppkopf-Aufnahme 1b an ihrem vorderen Ende eine Flanschplatte 1b1 auf, die jeweils etwa vertikal stehen und aneinander angelegt und über in Längsrichtung 10 sich erstreckende Verbindungsschrauben 30 miteinander verschraubt sind.

Wie die Schnittdarstellung gemäß **Figur 3c** zeigt, sind die Verbindungsschrauben 30 um den Umfang der Flanschplatten herum gleichmäßig verteilt angeordnet, und insbesondere symmetrisch zur LängsMittelebene 10'.

Von dieser Flanschplatte 1b1 der Schleppkopf-Aufnahme 1b ragt zum einen ein Zentralblock 1b3 in Längsrichtung 10 nach hinten ab, auf dessen Oberseite und Unterseite jeweils eine Befestigungsplatte 1b2 über Verbindungsschrauben 31 mit dem Zentralblock 1b3 verschraubt ist und die beide in Längsrichtung 10 nach hinten über den Zentralblock 1b3 vorstehen und damit zwischen sich eine Ausnehmung bilden.

In diese Ausnehmung zwischen die beiden Befestigungsplatten 1b2 ragt das hintere Ende des Zentralkörpers 2a des Schleppkopfes 2 hinein, welches eine Höhe entsprechend der Höhe dieser Ausnehmung entspricht. Der Zentralkörper 2a erstreckt primär ebenfalls in Längsrichtung 10 und trägt an seinem Flugzeug-seitigen Ende die beschriebene Kupplung 14 und auf der Oberseite den Schwenkhebel 17 zum Betätigen der Kupplung.

Bei richtiger Positionierung des Zentralkörpers 2a zwischen den Basisplatten 1b2 und in Längsrichtung 10 noch im Abstand zum Zentralblock 1b3 verlaufen durch alle drei Bauteile, also die Basisplatten 1b2 und den Zentralkörper 2a, mehrere von oben bis unten durchgehende Durchgangsöffnungen 13, 16 hindurch:
Zum einen sind beidseits der aufrecht stehenden Längsmittelebene 10' - in der Aufsicht der **Figur 3b** betrachtet -symmetrisch zueinander je eine Durchgangsöffnung 13 angeordnet und vorzugsweise auf der Längsmittelebene 10' und meist näher am Zentralrohr 1a eine deutlich größere Durchgangsöffnung 16 als Zentralöffnung.

Durch die Durchgangsöffnungen 13 erstreckt sich jeweils ein Scherstift 3 meist mit einem oberen verbreiterten Kopf 3a hindurch, der von oben eingeführt wird und in seinem Überstand über die Unterseite der unteren Basisplatte 1b2 gegen Herausziehen gesichert ist, beispielsweise indem er dort eine Querbohrung 21 aufweist, durch die ein Sicherungsstift 22 geschoben wird, oder indem dort eine Sicherungsmutter 18 auf geschraubt ist.

Bevor zu hohe Kräfte vom Schlepper 200 über die Schleppstange 100 auf das Bugfahrwerk 301 übertragen werden, wird einer der Scherstifte 3 oder gar beide abscheren und die Verbindung zwischen dem Grundkörper 1 und dem Schleppkopf 2 der Schleppstange 100 verloren gehen.

Damit diese Teile in einem solchen Fall nicht voneinander getrennt werden, verläuft durch die zentrale Durchgangsöffnung 16 die in der Aufsicht betrachtet auch langlochförmig und in Längsrichtung 10 verlaufend ausgebildet sein kann, ein Fangbolzen 12 hindurch, der meist ebenfalls von oben eingeführt wird und einen oberen verbreiterten Kopf besitzt und an der Unterseite mittels einer Sicherungsmutter 18 gegen unbeabsichtigtes Herausziehen gesichert ist.

Durch einen definierten Abstand der Scherstifte 3 zur Längsmittelebene 10' kann auch besser die Übertragung von Torsionskräfte um die Längsachse verhindert werden als durch einen zentralen einzigen Scherstift.

Der Fangbolzen 12 besitzt eine höhere Bruchlast als die Scherstifte 3, meist die 1,5-fache Bruchlast, würde also bei einem Bruch der Scherstifte 3 nicht sofort brechen, sondern die Verbindung zwischen den beiden Teilen 1 und 2 der Schleppstange 100 aufrecht erhalten. Ein solcher Fangbolzen 12 ist in aller Regel zusätzlich von einem Mantel aus elastischem, dämpfenden Material wie etwa Gummi umgeben, welches der Abfederung von harten Stößen, beispielsweise beim Bruch der Scherstifte 3, dienen soll Dennoch würde der Fahrer des Schleppers 200 den Bruch des Scherstiftes 3 durch einen auftretenden Schlag bemerken.

Lediglich der Vollständigkeit halber soll klargestellt werden, das natürlich auch die Verbindungsschrauben 30 und 31 eine höhere Bruchlast aufweisen als die eingesetzten Scherstifte 3, die passend zu dem jeweils zu bewegenden Flugzeugtyp ausgewählt, aus einem Magazin 28 auf der Oberseite der Basisstange 1a entnommen und in die Durchgangsöffnungen 13 gesteckt und dort gesichert werden.

Erfindungsgemäß soll der Bruch eines Scherstiftes 3 möglichst verhindert werden.

Zu diesem Zweck ist eine Warnvorrichtung 6 vorhanden, die mit einer Kraftmess-Vorrichtung 5 in Verbindung steht, welche ein oder mehrere Kraft-Sensoren 5a umfasst und die von den einzelnen Sensoren 5a gemessenen Kräfte in Form eines elektrischen Signals an die Warnvorrichtung 6 meldet. Die Warnvorrichtung vergleicht die an den einzelnen Kraft-Sensoren 5a gemessenen Kräfte mit einem oder mehreren vorgegebenen, in der Warnvorrichtung gespeicherten Grenzwerten, und führt eine entsprechende Warnreaktion aus.

Sowohl die Messvorrichtung 5 als auch die Warnvorrichtung 6 funktionieren elektrisch und benötigen eine Stromversorgung, vorzugsweise in Form eines elektrischen Akkus 4 als Stromquelle.

Der elektrische Akku 4 ist ebenso wie die elektronischen Teile der Warnvorrichtung 6 geschützt im Inneren des Basisrohres 1a untergebracht, wobei elektrische Anschlüsse 9 zum Laden des Akkus 4 auf der Außenseite des Basisrohres 1a vorhanden und erreichbar sind. Der Akku 4 ist entweder aus Zugänglichkeitsgründen nahe des Schlepper-seitigen Endes angeordnet oder für den Erhalt eines mit Längsrichtung mittigen Schwerpunktes der Schleppstange 100 oberhalb der Räder 20a, b des Schleppstangen-Fahrwerks angeordnet.

Als Kraft-Sensoren 5a könnten im einfachsten Fall passive Sensoren wie etwa Dehnmessstreifen 34 auf ein oder mehreren Teilen der Schleppstange 100, beispielsweise der Außenfläche oder auch Innenfläche des Zentralrohres 1a, möglichst in der Nähe der Warnvorrichtung 6, aufgebracht werden, wie in **Figur 2a****,** **2b** dargestellt, die dann mittels kurzer elektrischer Leitungen mit der Warnvorrichtung 6 verbunden sind.

Elektrische Energie wird dann lediglich zum Auswerten und gegebenenfalls Weiterleiten der Signale durch die Messvorrichtung 5 sowie zum Betreiben der Warnvorrichtung 6 benötigt wird.

Solche, vor allem an der Außenseite aufgebrachte, Kraft-Sensoren 5a werden jedoch leicht beschädigt und sind deshalb höchstens zusätzlich vorgesehen.

Häufig werden deshalb aktive elektrische Kraft-Sensoren 5a, die zum Messen eine Stromversorgung benötigen, eingesetzt.

Bevorzugt werden als Kraft-Sensoren 5a Lastmessbolzen 7 verwendet, die den Kraft-Sensor 5a beinhalten, und die auf den Lastmessbolzen 7 einwirkende Kraft messen, und dabei handelt es sich meist um aktive, eine Stromversorgung benötigende, Lastmessbolzen 7.

Die Messsignale gelangen dabei vom Lastmessbolzen 7 entweder über Kabel, vorzugsweise jedoch über einen mit dem Kraft-Sensor 5a gekoppelten Sender 5b drahtlos, vorzugsweise mittels Funksignalen, zu der Warnvorrichtung 6, vor allem, wenn sich der Lastmessbolzen 7 nicht am oder im Basisrohr 1a befindet.

Eine erste Möglichkeit besteht darin, einen solchen Lastmessbolzen 7 direkt als Scherstift 3 einzusetzen, dessen Belastung somit direkt und ständig überwacht wird und mit einem vorgegebenen Grenzwert, beispielsweise der Bruchlast des Scherstiftes 3, von der Warnvorrichtung 6 verglichen werden kann. Hierfür werden Lastmessbolzen 7 benötigt, die an ihnen angreifende Scherkräfte, also quer zu deren Erstreckungsrichtung 7, messen.

Bei zwei vorhandenen Scherstiften 3 werden vorzugsweise natürlich beide durch einen Lastmessbolzen 7 ersetzt, vor allem auch deshalb, um durch Vergleich der an den beiden Lastmessbolzen auftretenden Scherkräfte das auf die Schleppstange wirkende Drehmoment um eine aufrechte Achse, die zwischen den beiden Lastmessbolzen und parallel zu diesen verläuft, berechnen zu können.

Der Nachteil besteht darin, dass die ohnehin in der Herstellung komplexen Scherstifte 3 zusätzlich mit dem Kraft-Sensor 5a und dem Sender 5b ausgestattet werden müssen, was die Herstellung der Scherstifte 3 stark verteuert.

Ein solcher Lastmessbolzen 7 kann jedoch auch an jeder anderen Stelle in der Schleppstange 100 eingesetzt werden, an der die in der Schleppstange 7 vorliegende Belastung, insbesondere die Längskraft, ebenfalls auftritt, von der dann, meist rechnerisch, auf die im Scherstift 3 vorliegende Belastung geschlossen werden muss.

Eine zweite Möglichkeit besteht deshalb darin, wenigstens eine der Verbindungsschrauben 31 zwischen den Basisplatten 1b2 und dem Basisblock 1b3 des Schleppkopfes 2 als Lastmessbolzen 7 auszuführen.

Auch hierfür werden bevorzugt Lastmessbolzen 7 verwendet, die an ihnen angreifende Scherkräfte, also quer zu deren Erstreckungsrichtung 7, messen.

Eine dritte Möglichkeit besteht darin, eine oder mehrere der in Längsrichtung 10 verlaufenden Verbindungsschrauben 30, durch welche das Basisrohr 1a und die Schleppkopf-Aufnahme 1b, insbesondere konkret die beiden Flanschplatten 1a1 und 1b1 gegeneinander verschraubt werden, als solche Lastmessbolzen 7 auszuführen.

Hierfür werden Lastmessbolzen 7 benötigt, die an ihnen angreifende Längskräfte, also in deren Erstreckungsrichtung 7' angreifende Kräfte, messen.

Wenn hierbei beidseits der aus **Figur 3c** ersichtlichen, aufrecht stehenden Längs-Mittelebene 10' jeweils mindestens ein Lastmessbolzen 7 vorhanden ist, kann durch Vergleich der von diesem Lastmessbolzen 7 gemessenen Kräfte auf den beiden Seiten der Längsmittelebene ebenfalls das um eine aufrechte Achse in der Schleppstange 100 vorliegende Drehmoment ermittelt werden'

Der Vorteil bei Einsatz der Lastmessbolzen 7 an dieser Stelle besteht darin, dass dann ohne großen Aufwand auch eine Kabelverbindung von der Flanschplatte 1a1 zu der im Basisrohr 1a befindlichen Warnvorrichtung 6 im geschützten Inneren des Basisrohres 1a hergestellt werden kann, sodass kein Sender 5b notwendig ist.

Eine vierte Möglichkeit würde noch darin bestehen, den Kupplungsbolzen 204, der zum Ankuppeln der Schleppstange 100 am Kupplungsmaul 203 des Schleppers 200 dient, als Kraftlastmessbolzen 7 auszuführen, vor allem dann, wenn der Kupplungsbolzen 204 nicht manuell gehandhabt wird, sondern mittels eines Kupplungs-Antriebes 205, der meist am Schlepper oder stattdessen auch an der Schleppstange 100 vorhanden ist und manuell oder von der Steuerung 202 des Schleppers 200 aus angesteuert motorisch bewegt wird.

Natürlich können die Lastmessbolzen 7 auch an mehreren der genannten Stellen eingesetzt werden, und die Messvorrichtung 5 ggfs. auch noch zusätzlich Kraft-Sensoren 5a in anderer Form, insbesondere in Form von Dehnmessstreifen 34, umfassen, um eine möglichst redundante Kraftmessung und Auswertung durch die Warnvorrichtung 6 zu ermöglichen.

**Figur 4** zeigt als weitere Lösung die Verwendung eines Ringkraft-Aufnehmers 35, der in diesem Fall mit seiner axialen Richtung 35' parallel und fluchtend zur Längsrichtung 10 der Schleppstange 100 zwischen der Basisstange 1a und der Schleppkopf-Aufnahme 1b1 zwischen den dort beidseits vorhandenen Flanschplatten 1a1 und 1b1 verschraubt ist.

Hierzu wird je einer der beiden Befestigung-Ringe 35a, b des Ringkraft-Aufnehmers 35, die über einen Zwischenring 36 meist dicht miteinander verbunden sind, mit je einer der Flanschplatten 1a1 und 1b1 verschraubt.

Aus dem Zwischenring 36 führt meist ein Kabel 37 heraus, mit dem die innerhalb des Ringkraft-Aufnehmers 35 gemessenen Kräfte - je nach Auslegung Kräfte in axialer Richtung 35' des Ringkraft-Aufnehmers 35 und/oder in wenigstens einer der Querrichtungen hierzu - ausgegeben werden und ebenso eventuell bereits das um in eine der Richtungen des Ringskraft-Aufnehmer vorliegende Drehmomente, falls die Umrechnung der gemessenen Kräfte in solche Drehmomente bereits im Inneren des Ringkraft-Aufnehmers erfolgt, was ansonsten auch außerhalb in einer separaten Auswerteeinheit erfolgen kann.

Um den Akku 4 nicht von außen nachladen zu müssen, können die Räder des Schleppstangen-Fahrwerks 19 mit einem elektrischen Generator 23 gekoppelt sein, der beim Fahren der Räder 20a, b auf dem Untergrund Strom erzeugt und darüber den Akku 4 nachlädt, und der in **Figur 2b** sogar bei jedem der Räder 20a, b separat als Radenaben-Generator 23 dargestellt ist.

Als Alarmgeber 6b kann als akustischer Alarmgeber eine Hupe oder eine Sirene dienen, die vorzugsweise an der Schleppstange 100 angeordnet ist und ein akustisches Signal abgibt. Ebenfalls an der Schleppstange 100 kann auch ein optischer Alarmgeber 6b in Form von Lampen oder Leuchtdioden vorhanden sein, wobei sich beides auch - insbesondere zusätzlich - in der Fahrerkabine 201 des Schleppers 200 befinden kann, um den darin sitzenden Fahrer darauf aufmerksam zu machen.

Vorzugsweise ist in der Fahrerkabine 201 auch ein Display 6a vorhanden, auf dem als optischem Alarmgeber 6b die Werte der von der Kraftmess-Vorrichtung 5 gemessenen Kräfte und / oder diese Kräfte in Relation zu einem vorgegebenen Grenzwert, insbesondere der Bruchspannung des momentan verwendeten Scherstiftes 3, angezeigt werden kann, etwa mittels der üblichen Farbcodierung grün, gelb, rot für die Stufen unkritisch, nahe am kritischen Bereich, kritisch.

Da die Schleppstange 100 nun über eine eigene Stromversorgung verfügt, können Vorgänge, die an der Schleppstange 100 bisher manuell durchgeführt wurden, motorisch angetrieben durchgeführt oder gar automatisiert werden:
So kann die Ausfahr-Vorrichtung 25 zum Ausfahren des Schleppstangen-Fahrwerks 19, also der Räder 20 a, b, nach unten und zurück mittels eines Antriebsmotors 24 durchgeführt werden. Das Betätigungselement 25a hierfür, beispielsweise ein Taster oder ein Schalter, kann an der Schleppstange 100 möglichst in der Nähe des Schleppstangen-Fahrwerks 19 vorgesehen sein, jedoch kann das Aus- und Einfahren auch mittels einer Fernbedienung als Betätigungselement 25a, die der Fahrer des Schleppers 200 bei sich trägt, drahtlos bewirkt werden.

Somit könnte der Fahrer das Schleppstangen-Fahrwerk 19 - in diesem Fall die um eine horizontale Schwenkachse 32' verschwenkbare Schwinge 32, an deren anderen Ende sich die Räder 20a, b befinden, wie in den **Figuren 2a** **und** **3a** dargestellt - in die aktivierte Stellung ausfahren, ohne die Fahrerkabine 201 des Schleppers 200 verlassen zu müssen und natürlich ebenso das Einfahren des Schleppstangen-Fahrwerks 19.

Ferner können die Räder 20 a, b mittels eines elektrischen Antriebsmotors 24 angetrieben werden, der vorzugsweise funktionsvereinigt mit dem Generator 23 als E-Maschine ausgebildet ist und vorzugsweise wieder in den Rädern als Radnaben-Maschine sitzt.

Ein Betätigungselement 24a zum Ingangsetzen des Antriebsmotors 24 und auch Wahl der Drehrichtung der Räder 20 a, b befindet sich an der Außenseite der Schleppstange 100, vorzugsweise an oder in der Nähe jedes der Handgriffe 15, die in beiden Endbereichen zum manuellen Verfahren der Schleppstange 100 vorhanden sind in vorzugsweise einer solchen Position, dass sie von der den Handgriff 15 haltenden Hand betätigt werden können.

### BEZUGSZEICHENLISTE

- 1: Grundkörper
- 1a: Basisstange
- 1b: Schleppkopf-Aufnahme
- 1a1, 1b1: Flanschplatte
- 1b2: Basis-Platte
- 1b3: Zentralblock
- 1c: Anhänge-Öse
- 2: Schleppkopf
- 2a: Zentralkörper
- 3: Scherstift
- 3a: Kopf
- 3b: Schaft
- 4: Akku
- 5: Kraftmeß-Vorrichtung
- 5a: Kraftsensor
- 5b: Sender
- 6: Warnvorrichtung
- 6a: Display
- 6b: Alarmgeber
- 7: Last-Meßbolzen
- 7': Erstreckungsrichtung
- 8: Positionssensor
- 8': Identifikationssensor
- 9: Stromanschluss
- 10: Längsrichtung
- 10': Längsmittel-Ebene
- 11: Querrichtung
- 12: Fangbolzen
- 13: Durchgangsöffnung
- 14: Flugzeug-Kupplung
- 14': Schlepper-Kupplung
- 15: Handgriff
- 16: Zentralöffnung
- 17: Schwenkgriff
- 18, 18': Sicherungsmutter
- 19: Schleppstangen-Fahrwerk
- 20a, b: Rad
- 21: Querbohrung
- 22: Sicherungsstift
- 23: Generator
- 24: Antriebsmotor
- 24a: Betätigungselement
- 25: Ausfahr-Vorrichtung
- 25a: Betätigungselement
- 25b: Ausfahr-Motor
- 26: Rinne
- 27: Schieber
- 28: Magazin
- 29: Betätigung-Element
- 30: Verbindungs-Schraube
- 31: Verbindungs-Schraube
- 31': Erstreckungsrichtung
- 32: Schwinge
- 32': Schwenkachse
- 33: Pumphebel
- 34: Dehnmessstreifen
- 35: Ringskraft-Aufnehmer
- 35': axiale Richtung
- 35a, b: Befestigungs-Ring
- 36: Zwischenring
- 37: Kabel

- 100: Schleppstange

- 200: Schlepper
- 201: Fahrerkabine
- 202: Steuerung, Fahrzeugsteuerung
- 203: Kupplungsmaul
- 204: Kupplungsbolzen
- 205: Kupplungsantrieb

- 300: Flugzeug
- 301: Bugfahrwerk
- 301a: Querbolzen

- 400: Untergrund

## Patentansprüche

1. Schleppstange (100) für das Schleppen oder Schieben von Luftfahrzeugen (300) an deren Bugfahrwerk (301) umfassend
- einen Grundkörper (1), der über wenigstens einen Scherstift (3) formschlüssig mit einem in Längsrichtung (10) daran anschließenden Schleppkopf (2) gekoppelt ist,
- wobei der Grundkörper (1) in seinem von Schleppkopf (2) abgewandten, ersten freien Endbereich eine Schlepper-Kupplung (14') zum Ankuppeln des Schleppers (200) aufweist und
- der Schleppkopf (2) in seinem 2. freien Endbereich eine Flugzeug-Kupplung (14) zum Ankuppeln des Bugfahrwerks (301) des zu schleppenden Luftfahrzeuges (300) aufweist,
wobei die Schleppstange (100)
- eine elektrische Kraft-Messvorrichtung (5) mit einem Kraft-Sensor (5a) umfasst, der ein elektrisches Signal entsprechend der in der Schleppstange (100) gemessenen Kraft abgibt, wobei die Messvorrichtung (5) so ausgebildet ist, dass sie in der Lage ist, Kräfte in Längsrichtung (10) und/oder in einer der Querrichtungen (11.1, 11.2) hierzu und/oder Drehmomente um eine der Querrichtungen (11.1, 11.2) zu messen,
- eine Stromquelle umfasst,
- die Messvorrichtung (5) Bestandteil einer Warnvorrichtung (6) ist, die in der Lage ist, bei Überschreiten eines ersten Grenzwertes der gemessenen Kraft oder des gemessenen Drehmomentes eine Warnreaktion durchzuführen.

2. Schleppstange nach Anspruch 1,
wobei
- die Messvorrichtung (5) so ausgebildet ist, dass sie in der Lage ist, Drehmomente um die Vertikale (11.1) zu messen,
- insbesondere die Messvorrichtung (5) in einer der Kupplungen (14, 14') der Schleppstange (100) angeordnet ist,
und/oder
- die Warnvorrichtung (6) in der Lage ist, bei Überschreiten des ersten Grenzwertes der gemessenen Kraft oder des gemessenen Drehmomentes durch einen Alarmgeber (6b) ein Warnsignal abzugeben.

3. Schleppstange nach einem der vorhergehenden Ansprüche,
wobei
- die Messvorrichtung (5) einen, insbesondere zylindrischen, insbesondere ringförmigen, Ringkraft-Aufnehmer (35) umfasst,
- der in der Lage ist, zumindest Kräfte in seiner axialen Richtung (35') und/oder Drehmomente um eine der Querrichtungen hierzu zu messen,
- der insbesondere mit seiner axialen Richtung (35') in Längsrichtung (10) verlaufend zwischen zwei in Längsrichtung (10) aufeinanderfolgenden Teilen der Schleppstange (100), insbesondere zwischen Basisstange (1a) und SchleppkopfAufnahme (1b), angeordnet ist.

4. Schleppstange nach einem der vorhergehenden Ansprüche,
wobei
- die Messvorrichtung (5) wenigstens einen Lastmess-Bolzen (7) umfasst, der die im Lastmess-Bolzen (7) anliegende Kraft in wenigstens einer der Querrichtungen zur Erstreckungsrichtung (7') des Lastmess-Bolzens und/oder in dessen Erstreckungsrichtung (7') misst und insbesondere ausgibt,
- insbesondere der Lastmess-Bolzen (7) so angeordnet ist, dass er zwei Teile der Schleppstange (100), die insbesondere in Längsrichtung (10) hintereinander angeordnet sind, insbesondere die Schleppkopf-Aufnahme (1b) und den Schleppkopf (2) oder die Basisstange (1a) und die Schleppkopf-Aufnahme 1b), formschlüssig miteinander verbindet.

5. Schleppstange nach einem der vorhergehenden Ansprüche,
wobei
- der Lastmess-Bolzen (7)
- entweder wenigstens einer der Scherstifte (3) ist,
- oder zusätzlich zu dem wenigstens einen Scherstift (3) an der Schleppstange (100) vorhanden ist und
- insbesondere so angeordnet und/oder dimensioniert ist, dass bei Kraftbeaufschlagung der Schleppstange (100) der Lastmess-Bolzen (7) gleichzeitig mit dem Scherstift (3) mit Kraft beaufschlagt wird,
- oder der Lastmess-Bolzen (7) als Befestigungsschraube (31) zwischen der Schleppkopf-Aufnahme (1b) und dem Schleppkopf (2) vorhanden ist,
- - oder der Lastmess-Bolzen (7) als Befestigungsschraube (30) zwischen der Basisstange (1a) und der Schleppkopf-Aufnahme (1b) vorhanden ist,
- oder der Lastmess-Bolzen (7) als Befestigungsbolzen (31') zwischen der Schleppkopf-Aufnahme (1b) und dem Schleppkopf (2) vorhanden ist,
- oder der Lastmess-Bolzen (7) als Kupplungsbolzen (204) für die Schlepper-Kupplung (14) vorhanden ist.

6. Schleppstange nach einem der vorhergehenden Ansprüche,
wobei
- die Warnvorrichtung (6) in der Lage ist, über einen Alarmgeber (6b) ein optisches und/oder akustisches Warnsignal abzugeben, und/oder
- die Warnvorrichtung (6) hinsichtlich Signalübertragung und/oder Energieübertragung drahtlos, insbesondere über Funk oder per Bluetooth, mit der Messvorrichtung (5) verbunden ist.

7. Schleppstange nach einem der vorhergehenden Ansprüche,
wobei
- die Warnvorrichtung (6) an der Schleppstange (100) und/oder am oder im Schlepper (200), insbesondere in der Fahrerkabine (201) des Schleppers (200), angeordnet ist
- und insbesondere die Warnvorrichtung (6) ein Display (6a) als Alarmgeber (6b) in der Fahrerkabine (201) des Schleppers (200) umfasst, auf dem die Größe der gemessenen Kraft entweder in Absolutwerten oder in Relation zur Bruchspannung des momentan verwendeten Scherstiftes (3) angezeigt ist, insbesondere in den drei Relationsstufen unkritisch, nahe am kritischen Bereich, kritisch.

8. Schleppstange nach einem der vorhergehenden Ansprüche,
wobei
- die Warnvorrichtung (6) mit der Fahrzeug-Steuerung (202) des Schleppers (200) wirkverbunden ist und insbesondere in der Lage ist, bei Überschreiten eines insbesondere zweiten Grenzwertes ein Steuersignal abzugeben, welches in der Lage ist, die Fahrgeschwindigkeit des Schleppers zu reduzieren, insbesondere auf Null zu reduzieren, insbesondere abhängig von der momentanen Relationsstufe.

9. Schleppstange nach einem der vorhergehenden Ansprüche,
wobei
- ein Positions-Sensor (8) vorhanden ist, der den eingesetzten Scherstift (3) hinsichtlich seiner Axialposition in der Schleppstange (100) detektiert und signaltechnisch mit der Warnvorrichtung (6) verbunden ist.
und/oder
- ein Identifikations-Sensor (8') vorhanden ist, der den eingesetzten Scherstifte (3) hinsichtlich seiner Art, insbesondere hinsichtlich seines Durchmessers an der Sollbruchstelle, identifiziert und signaltechnisch mit der Warnvorrichtung (6) verbunden ist.

10. Schleppstange nach einem der vorhergehenden Ansprüche,
wobei
- die Kupplung des Schleppers (200) einen mittels Federkraft in die EinschubRichtung vorgespannten Kupplungsbolzen (204) und/oder einen mittels eines Kupplung-Antriebs (205) motorisch, insbesondere elektrisch, ein- und ausfahrbahren Kupplungsbolzen (204) umfasst.

11. Schleppstange nach einem der vorhergehenden Ansprüche, wobei die Schleppstange (100) ein Schleppstangen-Fahrwerk (19) mit wenigstens zwei Rädern (20a, b) umfasst sowie eine Ausfahr-Vorrichtung zum Ausfahren der Räder (20a, b) relativ zum Grundkörper (1), die insbesondere an der Basisstange (1a) angeordnet ist,
wobei die Ausfahr-Vorrichtung über einen elektrischen Ausfahr-Antrieb verfügt, der von der Stromquelle, insbesondere vom Akku (4), mit Strom versorgt wird.

12. Schleppstange nach einem der vorhergehenden Ansprüche, wobei die Schleppstange (100) ein Schleppstangen-Fahrwerk (19) mit wenigstens zwei Rädern (20a, b) umfasst
wobei
- wenigstens eines der Räder (20a, b) des Schleppstangen-Fahrwerks (19) einen elektrischen Antriebs-Motor (24) umfasst sowie ein Betätigungselement (29) an der Schleppstange (100), um den Antriebsmotor (24) in Gang zu setzen, und der elektrische Antriebsmotor (24) insbesondere funktionsvereinigt ist mit dem elektrischen Generator (23)
und/oder
- wenigstens eines der Räder (20a, b) des Schleppstangen-Fahrwerks (19) mit einem Generator (23) wirkverbunden ist, der bei Drehen des Rades (20a, b) elektrische Energie erzeugen kann und der zum Einspeisen dieser elektrischen Energie mit dem Akku (4) verbunden ist. )

13. Schleppstange nach einem der vorhergehenden Ansprüche,
wobei
- der Grundkörper (1) eine Basisstange (1a), insbesondere ein hohles Basisrohr (1a), und eine daran, insbesondere in Längsrichtung (10) am Luftfahrzeug-seitigen Ende, befestigte Schleppkopf-Aufnahme (1b) umfasst,
- Insbesondere die Stromquelle, insbesondere ein Akku (4), im Inneren des Basisrohres (1a) angeordnet ist und
- insbesondere auf der Außenseite des Basisrohres (1a) ein Stromanschluss (9) zum Nachladen des Akkus (4) vorhanden ist.

14. **Verfahren** zum Betreiben einer Schleppstange (100) gemäß einem der vorhergehenden Ansprüche mit der Warnvorrichtung (6) zum Überwachen der Längskraft und/oder des Drehmomentes in der Schleppstange (100),
wobei für das Schleppen oder Schieben eines Luftfahrzeuges (300) vor Erreichen der kritischen Längskraft und/oder dieses Drehmoments vom Fahrer oder der Steuerung (202) des Schleppers (200) die vom Schlepper (200) in die Schleppstange (100) eingebrachte Kraft nicht weiter erhöht oder reduziert wird.

15. Verfahren nach Anspruch 14,
wobei
- das Schleppstangen-Fahrwerk (19) motorisch angehoben und abgesenkt wird, insbesondere gesteuert mittels eines vom Bediener betätigten Betätigungs-Elementes,
und/oder
- der Kupplungs-Bolzen (204) der Schlepper-Kupplung (14') motorisch aus- und eingefahren wird, insbesondere gesteuert mittels eines vom Bediener betätigten Betätigungs-Elementes.

16. Verfahren nach Anspruch 14 bis 15,
wobei die Räder (20a, b) des Schleppstangen-Fahrwerks (19) motorisch angetrieben werden, insbesondere gesteuert mittels eines vom Bediener betätigten Betätigungs-Elementes,
- insbesondere bei einem in der Schleppstange (100) vorhandenen elektrischen Akku (4) dieser aufgeladen wird mit Hilfe eines mit wenigstens einem der Räder (20a, b) gekoppelten elektrischen Generators.

## Claims

1. Tow bar (100) for towing or pushing aircrafts (300) on their nose gear (301) comprising
- a base body (1) which is positively coupled via at least one shear pin (3) to a drag head (2) adjoining in the longitudinal direction (10),
- wherein the base body (1) has a tractor coupling (14') at its first free end region facing away from the drag head (2) for coupling the tractor (200) and
- the drag head (2) has at its second free end region an aircraft coupling (14) for coupling the nose gear (301) of the aircraft (300) to be dragged,
wherein
the tow bar (100)
- comprises an electrical force measuring device (5) with a force sensor (5a) which emits an electrical signal corresponding to the force measured in the tow bar (100), the measuring device (5) being embodied such that it is capable of measuring forces in the longitudinal direction (10) and/or in one of the transverse directions (11.1, 11.2) thereto and/or torques about one of the transverse directions (11.1, 11.2),
- comprises a current source,
- the measuring device (5) is part of a warning device (6) which is capable of carrying out a warning reaction when a first limit value of the measured force or torque is exceeded.

2. Tow bar according to claim 1,
wherein
- the measuring device (5) is embodied to measure torques about the vertical (11.1),
- in particular the measuring device (5) is arranged in one of the couplings (14, 14') of the tow bar (100),
and/or
- the warning device (6) is capable of emitting a warning signal when the first limit value of the measured force or the measured torque is exceeded by an alarm generator (6b).

3. Tow bar according to any of the preceding claims,
wherein
- the measuring device (5) comprises a, in particular cylindrical, in particular annular, ring force detector (35),
- which is capable of measuring at least forces in its axial direction (35') and/or torques about one of the transverse directions thereto,
- which is arranged in particular with its axial direction (35') running in the longitudinal direction (10) between two parts of the tow bar (100) which follow one another in the longitudinal direction (10), in particular between the base bar (1a) and the drag head receptacle (1b).

4. Tow bar according to any of the preceding claims,
wherein
- the measuring device (5) comprises at least one load measuring pin (7) which measures and in particular outputs the force applied in the load measuring pin (7) in at least one of the transverse directions to the direction of extension (7') of the load measuring pin and/or in its direction of extension (7'),
- in particular the load measuring pin (7) is arranged in such a way that it form-locking connects two parts of the tow bar (100), which are in particular arranged one behind the other in the longitudinal direction (10), in particular the drag head receptacle (1b) and the drag head (2) or the base bar (1a) and the tow head receptacle (1b).

5. Tow bar according to any of the preceding claims,
wherein
- the load measuring pin (7)
- is either at least one of the shear pins (3),
- or in addition to the at least one shear pin (3) is provided on the tow bar (100) and
- in particular is arranged and/or dimensioned in such a way that when force is applied to the tow bar (100), force is applied to the load measuring pin (7) simultaneously with the shear pin (3),
- or the load measuring bolt (7) is present as a fastening screw (31) between the drag head receptacle (1b) and the drag head (2),
- or the load measuring bolt (7) is present as a fastening screw (30) between the base bar (1a) and the drag head receptacle (1b),
- or the load measuring bolt (7) is present as a fastening bolt (31') between the drag head receptacle (1b) and the drag head (2),
- or the load measuring pin (7) is present as a coupling bolt (204) for the tractor coupling (14).

6. Tow bar according to any of the preceding claims,
wherein
- the warning device (6) is capable of emitting a visual and/or acoustic warning signal via an alarm generator (6b),
and/or
- the warning device (6) is connected to the measuring device (5) wirelessly, in particular via radio or Bluetooth, with regard to signal transmission and/or energy transmission.

7. Tow bar according to any of the preceding claims,
wherein
- the warning device (6) is arranged at the tow bar (100) and/or at or in the tractor (200), in particular in the driver's cab (201) of the tractor (200)
- and in particular the warning device (6) comprises a display (6a) as an alarm generator (6b) in the driver's cab (201) of the tractor (200), on which the magnitude of the measured force is displayed either in absolute values or in relation to the breaking tension of the shear pin (3) currently being used, in particular in the three relation stages uncritical, close to the critical range, critical.

8. Tow bar according to any of the preceding claims,
wherein
- the warning device (6) is operatively connected to the vehicle control (202) of the tractor (200) and, in particular, is capable, when a, in particular second, limit value is exceeded, of emitting a control signal which is capable of reducing the driving speed of the tractor, in particular to zero, in particular as a function of the present relation stage.

9. Tow bar according to any of the preceding claims,
Wherein
- a position sensor (8) is present which detects the inserted shear pin (3) with regard to its axial position in the tow bar (100) and is connected to the warning device (6) by means of signals
and/or
- an identification sensor (8') is present which identifies the inserted shear pin (3) with regard to its type, in particular with regard to its diameter at the predetermined breaking point, and is connected to the warning device (6) by means of signals.

10. Tow bar according to any of the preceding claims,
wherein
- the coupling of the tractor (200) comprises a coupling bolt (204) which is pretensioned in the direction of insertion by means of spring force and/or a coupling bolt (204) which can be retracted and forwarded by a coupling drive (205), in particular electrically.

11. Tow bar according to any one of the preceding claims,
wherein
the tow bar (100) comprises a tow bar chassis (19) with at least two wheels (20a, b) and an extension device for extending the wheels (20a, b) relative to the base body (1), which is arranged in particular at the base bar (1a),
wherein
the extension device has an electric extension drive which is supplied with power from the current source, in particular from the battery (4).

12. Tow bar according to any one of the preceding claims,
wherein the tow bar (100) comprises a tow bar chassis (19) having at least two wheels (20a, b).
wherein
- at least one of the wheels (20a, b) of the tow bar chassis (19) comprises an electric drive motor (24) and an actuating element (29) at the tow bar (100) in order to start the drive motor (24), and the electric drive motor (24) is, in particular, functionally connected to the electric generator (23)
and/or
- at least one of the wheels (20a, b) of the tow bar chassis (19) is operatively connected to a generator (23) which can generate electrical energy when the wheel (20a, b) rotates and which is connected to the battery (4) for feeding in this electrical energy.

13. Tow bar according to any of the preceding claims,
wherein
- the base body (1) comprises a base bar (1a), in particular a hollow base tube (1a), and a drag head receptacle (1b) attached thereto, in particular in the longitudinal direction (10) at the aircraft-side end,
- in particular the current source, in particular a battery (4), is arranged inside the base tube (1a), and
- in particular on the outside of the base tube (1a) there is a power connection (9) for recharging the battery (4).

14. A **method** of operating a tow bar (100) according to any one of the preceding claims, comprising the warning device (6) for monitoring the longitudinal force and/or torque in the tow bar (100),
wherein
for towing or pushing an aircraft (300), before reaching the critical longitudinal force and/or torque, the driver or the control (202) of the tractor (200) does not further increase or reduce the force applied by the tractor (200) to the tow bar (100).

15. Method according to claim 14,
wherein
- the tow bar chassis (19) is raised and lowered by motor, in particular controlled by means of an actuating element operated by the operator,
and/or
- the coupling bolt (204) of the tractor coupling (14') is extended and retracted by motor, in particular controlled by means of an actuating element operated by the operator.

16. Method according to claim 14 to 15,
wherein
- the wheels (20a, b) of the tow bar chassis (19) are motor-driven, in particular controlled by means of an actuating element operated by the operator,
- in particular in the case of an electric battery (4) present in the tow bar (100), the latter is charged with the aid of an electric generator coupled to at least one of the wheels (20a, b).

## Revendications

1. Barre de remorquage (100) pour remorquer ou pousser des aéronefs (300) sur leur train de roulement avant (301), comprenant
- un corps de base (1) qui est accouplé par complémentarité de forme par au moins une goupille de cisaillement (3) à une tête d'attelage (2) qui lui est adjacente dans la direction longitudinale (10),
- dans lequel le corps de base (1) présente, dans sa première région d'extrémité libre opposée à la tête d'attelage (2), un accouplement de traction (14') pour accoupler le véhicule remorqueur (200), et
- la tête d'attelage (2) comporte dans sa deuxième région d'extrémité libre un accouplement d'avion (14) pour accoupler le train de roulement avant (301) de l'avion (300) à remorquer,
dans laquelle
la barre de remorquage (100)
- comprend un dispositif de mesure de force électrique (5) avec un capteur de force (5a) qui émet un signal électrique correspondant à la force mesurée dans la barre de remorquage (100), le dispositif de mesure (5) étant adapté de telle sorte qu'il est capable de mesurer des forces dans la direction longitudinale (10) et/ou dans l'une des directions transversales (11.1, 11.2) à celle-ci et/ou des couples autour de l'une des directions transversales (11.1, 11.2),
- comprend une source d'énergie,
- dans lequel le dispositif de mesure (5) fait partie d'un dispositif d'alerte (6) qui est capable d'effectuer une réaction d'alerte lorsqu'une première valeur limite de la force mesurée ou du couple mesuré est dépassée.

2. Barre de remorquage selon la revendication 1,
dans laquelle
- le dispositif de mesure (5) est adapté de telle sorte qu'il est capable de mesurer des couples autour de la verticale (11.1),
- en particulier, le dispositif de mesure (5) est disposé dans l'un des accouplements (14, 14') de la barre de remorquage (100),
et/ou
- le dispositif d'alerte (6) est capable d'émettre un signal d'alerte par un émetteur d'alarme (6b) lorsque la première valeur limite de la force mesurée ou du couple mesuré est dépassée.

3. Barre de remorquage selon l'une des revendications précédentes,
dans laquelle
- le dispositif de mesure (5) comprend un capteur de force annulaire (35), notamment cylindrique, notamment annulaire,
- qui est capable de mesurer au moins des forces dans sa direction axiale (35') et/ou des couples autour d'une des directions transversales à celle-ci,
- qui est disposé, en particulier avec sa direction axiale (35') s'étendant dans la direction longitudinale (10), entre deux parties de la barre de remorquage (100) qui se succèdent dans la direction longitudinale (10), en particulier entre la barre de base (1a) et la réception de tête d'attelage (1b).

4. Barre de remorquage selon l'une des revendications précédentes,
dans laquelle
- le dispositif de mesure (5) comprend au moins une tige de mesure de charge (7) qui mesure et en particulier délivre la force appliquée dans la tige de mesure de charge (7) dans au moins une des directions transversales à la direction d'extension (7') de la tige de mesure de charge et/ou dans sa direction d'extension (7'),
- en particulier la tige de mesure de charge (7) est disposée de telle sorte qu'elle relie par complémentarité de forme deux parties de la barre de remorquage (100), qui sont en particulier disposées l'une derrière l'autre dans la direction longitudinale (10), notamment la réception de tête d'attelage (1b) et la tête d'attelage (2) ou la barre de base (1a) et la réception de tête d'attelage (1b).

5. Barre de remorquage selon l'une des revendications précédentes,
dans laquelle
- la tige de mesure de charge (7)
- soit est au moins une des goupilles de cisaillement (3),
- soit, est prévue sur la barre de remorquage (100) en plus de ladite au moins une goupille de cisaillement (3), et
- est notamment disposé et/ou dimensionné de telle sorte que, lorsqu'une force est appliquée à la barre de remorquage (100), la force est appliquée à la tige de mesure de charge (7) et simultanément à la goupille de cisaillement (3),
- soit la tige de mesure de charge (7) est présent comme vis de fixation (31) entre la réception de tête d'attelage (1b) et la tête d'attelage (2),
- soit la tige de mesure de charge (7) est présent comme vis de fixation (30) entre la barre de base (1a) et la réception de tête d'attelage (1b),
- ou la tige de mesure de charge (7) est prévue comme tige de fixation (31') entre la réception de tête d'attelage (1b) et la tête d'attelage (2),
- ou la tige de mesure de charge (7) est prévu comme tige d'accouplement (204) pour l'accouplement de remorqueur (14).

6. Barre de remorquage selon l'une des revendications précédentes,
dans laquelle
- le dispositif d'alerte (6) est capable d'émettre un signal d'alerte visuel et/ou sonore via un émetteur d'alarme (6b),
et/ou
- le dispositif d'alerte (6) est relié sans fil au dispositif de mesure (5) en ce qui concerne la transmission de signaux et/ou la transmission d'énergie, notamment par radio ou par Bluetooth.

7. Barre de remorquage selon l'une des revendications précédentes,
dans laquelle
- le dispositif d'alerte (6) est disposé sur la barre de remorquage (100) et/ou sur ou dans le remorqueur (200), en particulier dans la cabine de conduite (201) du remorqueur (200),
- et en particulier le dispositif d'alerte (6) comprend un écran (6a) en tant qu'émetteur d'alarme (6b) dans la cabine de conduite (201) du remorqueur (200), sur lequel l'amplitude de la force mesurée est affichée soit en valeur absolue, soit en relation avec la tension de rupture de la goupille de cisaillement (3) actuellement utilisée, en particulier dans les trois phases de relation non critique, proche de la plage critique, critique.

8. Barre de remorquage selon l'une des revendications précédentes,
dans laquelle
- le dispositif d'alerte (6) est en liaison opératoire avec le système de commande (202) du remorqueur (200) et est notamment capable, en cas de dépassement en particulier d'une deuxième valeur limite, d'émettre un signal de commande qui est capable de réduire la vitesse de déplacement du remorqueur, notamment à zéro, en particulier en fonction de l'état de relation instantanée.

9. Barre de remorquage selon l'une des revendications précédentes,
dans laquelle
- il est prévu un capteur de position (8) qui détecte la goupille de cisaillement (3) insérée par rapport à sa position axiale dans la barre de remorquage (100) et qui est relié au dispositif d'alerte (6) concernant les signaux,
et/ou
- il est prévu un capteur d'identification (8') qui identifie la goupille de cisaillement (3) insérée par rapport à son type, notamment par rapport à son diamètre au point de rupture prédéterminé, et qui est relié au dispositif d'alerte (6) concernant les signaux.

10. Barre de remorquage selon l'une des revendications précédentes,
dans laquelle
- l'accouplement du remorqueur (200) comprend une tige d'accouplement (204) qui est précontraint dans la direction d'insertion par la force d'un ressort et/ou une tige d'accouplement (204) qui peut être rentré et sorti au moyen d'un entraînement d'accouplement (205) par un moteur, notamment électrique.

11. Barre de remorquage selon l'une des revendications précédentes, la barre de remorquage (100) comprenant un train de barre de remorquage (19) avec au moins deux roues (20a, b) et un dispositif d'extension pour l'extension des roues (20a, b) par rapport au corps de base (1), qui est disposé en particulier sur la barre de base (1a),
où
l'appareil d'extension est doté d'une commande électrique d'extension qui est alimentée par la source d'énergie, en particulier par la batterie (4).

12. Barre de remorquage selon l'une des revendications précédentes, dans laquelle la barre de remorquage (100) comprend un train de barre de remorquage (19) ayant au moins deux roues (20a, b),
dans laquelle
- au moins une des roues (20a, b) du train de barre de remorquage (19) comprend un moteur d'entraînement électrique (24) et un élément de commande (29) sur la barre de remorquage (100) pour le démarrage du moteur d'entraînement (24), et le moteur d'entraînement électrique (24) est en particulier en liaison fonctionnelle avec le générateur électrique (23),
et/ou
- au moins une des roues (20a, b) du train de barre de remorquage (19) est reliée de façon opérationnelle à un générateur (23) qui peut produire de l'énergie électrique lorsque la roue (20a, b) tourne et qui est relié à la batterie (4) pour l'alimentation de cette énergie électrique.

13. Barre de remorquage selon l'une des revendications précédentes,
dans laquelle
- le corps de base (1) comprend une barre de base (1a), en particulier un tube de base creux (1a), et une réception de tête d'attelage (1b) qui y est fixé, en particulier dans la direction longitudinale (10) à l'extrémité côté avion,
- en particulier la source d'énergie, notamment une batterie (4), est disposée à l'intérieur du tube de base (1a), et
- en particulier, à l'extérieur du tube de base (1a), une prise de courant (9) est prévue pour recharger la batterie (4).

14. **Procédé** pour opérer une barre de remorquage (100) selon l'une des revendications précédentes, comprenant le dispositif d'alerte (6) pour surveiller la force longitudinale et/ou le couple dans la barre de remorquage (100),
dans laquelle
pour remorquer ou pousser un avion (300), avant que la force longitudinale critique et/ou ce couple ne soit atteint, le conducteur ou le système de commande (202) du remorqueur (200) n'augmente ou ne réduit plus la force appliquée par le remorqueur (200) à la barre de remorquage (100).

15. Procédé selon la revendication 14,
dans lequel
- le chariot de barre de remorquage (19) est levé et abaissé par un moteur, notamment commandé par un élément d'actionnement actionné par l'opérateur,
et/ou
- a tige d'accouplement (204) de l'accouplement de remorqueur (14') est sorti et rentré par un moteur, notamment commandé par un élément d'actionnement actionné par l'opérateur.

16. Procédé selon la revendication 14 à 15,
dans lequel
- les roues (20a, b) du chariot de barre de remorquage (19) sont entraînées par un moteur, notamment par un élément d'actionnement actionné par l'opérateur,
- en particulier dans le cas d'une batterie électrique (4) présente dans la barre de remorquage (100), cette dernière est chargée au moyen d'un générateur électrique accouplé à au moins une des roues (20a, b).
